# EUROPEAN PATENT APPLICATION

(11) **EP 3 805 797 A1**
(43) Date of publication of application: **14.04.2021**
(21) Application number: 19202528.6
(22) Date of filing: 10.10.2019
(51) Int. Cl.: G01S 19/21, G01S 19/33, G01S 19/05

(54) **DETECTION OF GNSS NAVIGATION DATA MANIPULATION BASED ON GNSS SYSTEM TIME DIFFERENCES**

(71) Applicant: HERE Global B.V., 5611 ZT Eindhoven (NL)
(72) Inventor: SÖDERHOLM, Stefan, 02780 Espoo (FI); SYRJÄRINNE, Jari Tapani, 33700 Tampere (FI); KUISMANEN, Saara, 33200 Tampere (FI)
(74) Representative: Cohausz & Florack

(57) **Abstract**

It is inter-alia disclosed a method performed by a mobile device, the method comprising:
- receiving at least one global navigation satellite system, GNSS, signal related to a first GNSS system time;
- determining at least one system time difference between the first GNSS system time and a reference time at least partially based on said at least one GNSS signal;
- obtaining at least one reference system time difference; and
- determining, at least partially based on said at least one system time difference and said at least one reference system time difference, whether or not said at least one GNSS signal is potentially manipulated.

## Description

### FIELD OF THE DISCLOSURE

The invention relates to the field of GNSS based radio positioning and more specifically to identifying potentially manipulated GNSS signals.

### BACKGROUND

Global navigation satellite systems (GNSS) such as the Global Positioning System (GPS) or the Galileo system form a basis for satellite based positioning. A mobile device receiving GNSS signals of e.g. four GNSS satellites may estimate its position based on GNSS navigation data included in GNSS signals received from each respective one of the four GNSS satellites. With Assisted-GNSS technology, GNSS signal receivers, e.g. in mobile devices, may obtain GNSS assistance data in addition to GNSS satellite signals, for example to take account of deteriorated GNSS signals e.g. in urban areas and/or to reduce the time required for acquiring GNSS satellite signals and navigation data, and for calculating a first position solution (time-to-first-fix, TTFF). GNSS systems include e.g. the GPS system, the Galileo system, the GLONASS system and the Beidou system. In addition to these four global satellite constellations, regional GNSS (augmentation) systems exist which comprise QZSS, MSAS, WAAS, EGNOS, GAGAN and SDCM.

In order to enable precise positioning based on navigation data included in received GNSS signals, the transmitting satellite systems employ respective GNSS system times which are synchronized with reference time scales such as the Universal Coordinated Time (UTC) or the International Atomic Time (TAI). Thereby, each GNSS system may have its own separate system time for its internal synchronization. For example, GPS Time (GPST), being the GNSS system time of the GPS system, is defined by the GPS Control Segment and is a continuous time scale. In other words, the GPST is not adjusted for leap seconds. GPST starts at 0^{h} (UTC) between the 5th and 6th of January 1980. Also the Galileo System Time (GST), being the GNSS system time of the Galileo system, is a continuous time scale and is maintained by the Galileo Central Segment. The starting point of GST is at midnight between the 21^{st} and 22^{nd} of August 1999. Galileo satellites broadcast the so called Galileo-GPS-Time-Offset (GGTO) within navigation data included in Galileo satellite signals. The GLONASS Time (GLONASST), being the GNSS system time of the GLONASS system, is a time system generated by the GLONASS Central Synchronizer. Unlike GPST and GST, GLONASST is adjusted for leap seconds. GLONASST is defined so that the difference between GLONASST and the Universal Time Coordinated by Russia (UTC(SU)) should not exceed 1 ms + 3 hours. The BeiDou Time (BDT), being the GNSS system time of the BeiDou system, is a continuous system time. The starting epoch is on the 1st of January 2006 at 0^{h} (UTC).

Thus, GNSS system times of each GNSS system are generated and synchronized separately. Therefore, respective pairs of GNSS system times are mutually synchronized and time-varying differences exist between system times of pairs of GNSS systems.

GNSS signals for civilian use are not encrypted. Thus, spoofing devices may be installed in certain areas for broadcasting spoofed GNSS signals that resemble true GNSS signals broadcast by GNSS satellites, however, that include manipulated GNSS navigation data. Receivers of GNSS devices (e.g. mobile devices) may be subject to manipulation ("spoofing") if such spoofed GNSS signals are received instead of true GNSS signals e.g. as a result of higher signal strength. GNSS receivers that are subjected to such spoofed GNSS signals may be caused to output erroneous position and/or time data. Such manipulation techniques are a threat e.g. to services which rely on trustworthy positioning, for example car sharing services.

### SUMMARY OF SOME EMBODIMENTS OF THE INVENTION

It is inter-alia an object of the present invention to improve the above disclosed global navigation satellite system (GNSS) based positioning systems to enable mitigating the threat associated with such manipulation techniques.

According to an exemplary aspect of the invention, a method performed by a mobile device is disclosed, wherein the method comprises:
- receiving at least one global navigation satellite system, GNSS, signal related to a first GNSS system time;
- determining at least one system time difference between the first GNSS system time and a reference time at least partially based on said at least one received GNSS signal;
- obtaining at least one reference system time difference; and
- determining, at least partially based on said at least one system time difference and said at least one reference system time difference, whether or not said at least one GNSS signal is potentially manipulated.

The disclosed method may serve for identifying potentially manipulated GNSS signals and/or GNSS navigation data.

The mobile device may be an Internet-of-Things (IoT) device, a smart home device, a smartphone, a tablet computer, a notebook computer, a smart watch, and a smart band.

For example, the disclosed method may be part of a GNSS based positioning solution performed by the mobile device to obtain or determine an estimate of its position (e.g. a position estimate of the mobile device). The mobile device may be enabled for or support such GNSS based positioning based on the Galileo system or the GPS system. This may be understood to mean that the mobile device is configured to estimate its position at least partially based on one or more GNSS signals (e.g. GNSS signals received e.g. from at least four GNSS satellites from one or more GNSS systems) received at this position, the GNSS signals e.g. comprising GNSS navigation data (e.g. GNSS navigation data of the at least four GNSS satellites). For example, the mobile device may be configured to (e.g. periodically or repeatedly or continuously) scan for GNSS signals observable at the position of the mobile device. The mobile device may further be enabled to receive GNSS signals (at least one GNSS signal) from one or more (e.g. from at least four) GNSS satellites during a time period, e.g. for estimating its position.

Each GNSS satellite may (e.g. periodically or repeatedly or continuously) broadcast respective GNSS signals comprising GNSS navigation data. For example, each GNSS satellite may (e.g. periodically or repeatedly or continuously) broadcast a respective GNSS signal conveying a message corresponding to or containing GNSS navigation data of the respective satellite (e.g. the navigation data may be part of the message). An example of such a message is a Galileo F/NAV message as specified by the Galileo open service specifications that are presently available in the Internet under https://www.gsc-europa.eu/electronic-library/programme-reference-documents#open. Another example for such a message is a GPS navigation message as specified by the GPS specifications that are presently available in the Internet under https://www.gps.gov/technical/. It is to be noted that, while receiving at least one GNSS signal may accordingly be understood to mean that the at least one GNSS signal is received from a GNSS satellite, said at least one GNSS signal may further be received from a spoofing device, for example by receiving at least one GNSS signal conveying a message containing GNSS navigation data from the spoofing device instead of from the GNSS satellite. A potentially malicious GNSS signal received from such spoofing device may be structured to resemble a true GNSS signal received from a GNSS signal, however, may e.g. include a manipulated navigation message and/or manipulated navigation data.

GNSS navigation data comprised by or included in a GNSS signal may for example contain at least one of (1) ephemeris data that enable determining an orbital position of a GNSS satellite (e.g. the GNSS satellite from which the at least one GNSS signal is received) at a given time (e.g. for a limited period of time) and (2) clock data related to a first GNSS system time (e.g. to the GNSS system time of said GNSS satellite from which the at least one GNSS signal is received) at a given time (e.g. for a limited period of time). The clock data may enable determining a deviation of a clock of the respective GNSS satellite that has transmitted the GNSS navigation data from a GNSS system time (e.g. Galileo system time or GPS time) at a given time. For example, the clock data may include or represent or contain clock correction parameters. The clock data may further include a time stamp indicative of the satellite system time and may thus (e.g. in combination with the clock correction data) enable determining a traveling time of the respective GNSS signal (from the GNSS satellite from which the at least one GNSS signal is received to the position of the mobile device). To this end, the clock data may for example comprise time data and correction data based on which said traveling time and a corresponding pseudorange from the transmitting satellite to a receiver may be calculated.

As disclosed above, the at least one GNSS signal is related to the first GNSS system time. This may be understood to mean that the at least one GNSS signal is related to the first GNSS system time by comprising said navigation data (e.g. comprising clock data) related to or being based on the first GNSS system time. In other words, being related to the first GNSS system time may be understood to mean that the at least one GNSS signal comprises a time stamp indicative of the first GNSS system time and optionally clock correction data. The first GNSS system time may for example be a time reference for the navigation data and/or the clock data, while the clock data may enable determining a deviation of a clock of at least one GNSS satellite (from which the at least one GNSS signal is received) from a corresponding (the first) GNSS system time at a given point in time. In other words, receiving at least one GNSS signal related to a first GNSS system time may be understood to mean receiving at least one GNSS signal comprising navigation data (e.g. comprising clock data) related to (or based on) a first GNSS system time.

In an exemplary embodiment, the method comprises
- determining a position estimate of the mobile device at least partially based on the received at least one GNSS signal.

This may be understood to mean determining a position estimate of the mobile device at least partially based on ephemeris data and clock data included in or comprised by GNSS navigation data comprised by the at least one GNSS signal. As mentioned, the at least one GNSS signal may correspond to at least four GNSS signals received from respective GNSS satellites of one or more GNSS systems (e.g. the GPS and/or the Galileo system). It is however to be understood that the determining may optionally depend on further data or information. For example, based on received GNSS navigation data from at least four GNSS satellites, the mobile device may be configured to derive respective positions of each of the at least four GNSS satellites and a traveling time of respective GNSS signals from each of the at least four GNSS satellites. Based on the traveling time, e.g. by multiplying the traveling time by the speed of light, the mobile device may be configured to determine a respective pseudorange, i.e. a distance between the mobile device and a respective transmitting GNSS satellite. For example, based on such information, the mobile device may be configured to determine an estimate of its position. As a non-limiting example, a corresponding positioning algorithm used by the mobile device when determining its position may include:
- for each one of a set of at least four GNSS satellites (of one or more GNSS systems), determining a pseudorange between the mobile device and the respective one of the at least four GNSS satellites at least partially based on navigation data (e.g. clock data) included in a GNSS signal broadcasted by the respective one of the at least four GNSS satellites;
- for each one of the set of the at least four GNSS satellites, determining an orbital position of the respective one of the at least four GNSS satellites at the time of transmitting at least partially based on the navigation data (e.g. ephemeris data) included in the GNSS signal broadcasted by the respective one of the at least four GNSS satellites; and
- determining a position of the mobile device, at least in part, based on the determined pseudoranges between the mobile device and each one of the at least four satellites and the determined orbital positions of the at least four satellites for example by employing pseudoranging.

As disclosed above, while GNSS systems may synchronize with reference time scales such as the Universal Coordinated Time (UTC) or the International Atomic Time (TAI), because different GNSS systems generate their respective system times and synchronize the same separately, differences (system time differences) exist between the system times of different GNSS systems. Such system time differences may vary over time. The GNSS system times each being synchronized with reference time scales such as UTC or TAI, it may for example be possible to represent a system time difference between a system time of a first GNSS system and a system time of a second GNSS system as a system time difference between said first GNSS system time and a reference time scale such as UTC or TAI. Thus, determining at least one system time difference between the first GNSS system time and a reference time may on the one hand be understood to mean determining at least one system time difference between the first GNSS system time (e.g. the GPS Time) and a second GNSS system time (e.g. the Galileo System Time) different from the first GNSS system time. On the other hand, determining at least one system time difference between the first GNSS system time and a reference time may be understood to mean determining at least one system time difference between the first GNSS system time and a reference time scale such as the UTC or the TAI.

Determining the at least one system time difference between the first GNSS system time and a reference time at least partially based on said at least one GNSS signal may be understood to mean calculating or estimating the at least one system time difference between the first GNSS system time and a reference time at least partially based on said at least one GNSS signal.

For example, in an exemplary embodiment, determining the at least one system time difference between the first GNSS system time and a reference time at least partially based on said at least one GNSS signal may be understood to mean determining, calculating or estimating the at least one system time difference at least partially based on a position solution, a position solution being e.g. a result of estimating a mobile device position based on the at least one GNSS signal (e.g. at least four GNSS signals received from GNSS satellites of at least two different GNSS systems). For example, since the position solution may be based on GNSS signals received from at least four GNSS satellites e.g. of different GNSS systems, each GNSS signal comprising clock data based on a respective GNSS system time, determining the at least one system time difference between the first GNSS system time and a reference time (a second GNSS system time different from the first GNSS system time) at least partially based on said at least one GNSS signal may be understood to mean employing a corresponding calculation based on the position solution of the mobile device to determine a respective time of the mobile device in the respective GNSS systems and to determine a GNSS system time difference based thereon.

Determining at least one system time difference between the first GNSS system time and a reference time may be understood to mean that one or more system time differences are determined at a single or at different (e.g. sequential) point(s) in time. For example, receiving at least one GNSS signal may be understood to mean receiving GNSS signals from at least four GNSS satellites during a predetermined period of time, e.g. for deriving a position solution or for GNSS navigation. One or more system time differences (e.g. a sequence of system time differences) may be determined during this predetermined time based on GNSS signals received from the at least four GNSS satellites.

Obtaining at least one reference system time difference may be understood to mean receiving the at least one reference system time difference via a bi-directional wireless connection e.g. from a network server such as an assisted-GNSS assistance data server or to mean extracting the at least one reference system time difference from a received GNSS signal (e.g. extracting a GGTO from a Galileo satellite signal).

Said at least one reference system time difference may be understood to be a (e.g. trusted, predetermined, stored at mobile device, calculated at mobile device, received from trusted source, etc.) difference between the first GNSS system time and said reference time (e.g. a second GNSS system time or a reference time scale such as UTC or TAI) obtained independently from the system time difference determined at least partially based on said at least one GNSS signal.

The difference between the GPS Time (GPST) and the Galileo System Time (GST), i.e. the Galileo-GPS-Time-Offset (GGTO), is an example of a reference system time difference. As disclosed above, this reference system time difference is included in navigation data broadcast by Galileo satellites. The GGTO is thus an example of a reference system time difference that is included in and may thus be obtained by extracting the same from the at least one GNSS signal to be e.g. compared to the system time difference determined based on the received at least one GNSS signal (e.g. determined based on a position solution dervived from received GPS and Galileo signals). Further GNSS systems may similarly broadcast navigation data including such offset as reference system time difference. In such cases the at least one reference system time difference may be extracted directly from received GNSS signals. In other words, in an exemplary embodiment, obtaining at least one reference system time difference may be understood to mean extracting the at least one reference system time difference from the at least one GNSS signal.

In a further exemplary embodiment, obtaining said at least one reference system time difference may be understood to mean obtaining the at least one reference system time difference (directly or indirectly) from a network server.

The network server may be a trusted server, e.g. a network server for assistance data (e.g. an assisted-GNSS assistance data server) and the at least one reference system time difference may be obtained as part of or with GNSS assistance data from said server. As disclosed above, GNSS assistance data obtained by GNSS receivers in addition to GNSS satellite signals may help taking account of deteriorated GNSS signals e.g. in urban areas and/or to reduce the time-to-first-fix (TTFF). Obtaining the at least one reference system time difference may further be understood to mean that the at least one reference system time difference is received via a wireless connection or communication path. In an exemplary embodiment, obtaining the at least one reference system time difference may be understood to mean receiving the at least one reference system time difference via a bi-directional wireless connection, i.e. a wireless connection that enables a network entity to transmit and receive data via said connection. Examples of such wireless connections include a wireless communication path or link in a wireless communication network, in particular a terrestrial wireless communication network like a Wireless Local Area Network (WLAN) or a cellular network. WLAN is for example specified by the standards of the IEEE 802.11 family (http://www.ieee.org/). A cellular network may for example be a mobile phone network like a 2G/3G/4G/5G cellular communication network. The 2G/3G/4G/5G cellular radio communication standards are developed by the 3GPP and presently available under http://www.3gpp.org/. A wireless connection may further include a Device-to-Device (D2D) communication path (e.g. involving vehicles, mobile devices, Road Side Units (RSU) or IOT devices). The at least one reference system time difference may be obtained directly or indirectly from the network server via any one or via any combination of such wireless connections including a necessary number of hops. The at least one reference system time difference may be obtained as part of a GNSS assistance data message e.g. received from the network server.

Obtaining the at least one reference system time difference may in a further exemplary embodiment be understood to mean obtaining the at least one reference system time difference based on an arithmetical prediction model. As disclosed above, GNSS system times are generated to be in synchrony with reference time scales such as the UTC or the TAI. For example, GPS Time (GPST) is defined by the GPS Control Segment and is a continuous time scale not being adjusted for leap seconds. GPST starts at 0^{h} (UTC) between the 5th and 6th of January 1980. The Galileo System Time (GST) is a continuous time scale starting at midnight between the 21^{st} and 22^{nd} of August 1999. Given for example such knowledge, an arithmetical prediction model for predicting a reference system time difference between the GPS system time (an example of a first GNSS system time) and the Galileo system time (an example of the second GNSS system time) can be built. Based on similar knowledge, arithmetical prediction models for predicting reference system time differences between GNSS systems such as GPS, Galileo, GLONASS and BeiDou can be built. Thereby, the at least one reference system time difference may be estimated at the mobile device based on such arithmetical prediction model. Further, the at least one reference system time difference may be estimated at a network entity (e.g. the above disclosed network server) and obtained by the mobile device from said network entity e.g. via a one or bi-directional wireless connection.

Obtaining at least one reference system time difference may be understood to mean that one or more reference system time differences are determined at a single or at different (e.g. sequential) point(s) in time, e.g. to correspond to one or more (e.g. sequential) system time differences determined at least partially based on said at least one GNSS signal (e.g. based on at least four GNSS satellites during a predetermined period of time).

Determining, at least partially based on said at least one system time difference and said at least one reference system time difference, whether or not the (received) at least one GNSS signal is potentially manipulated may be understood to mean determining whether or not the at least one GNSS signal is potentially received from or has been potentially transmitted from a device different from a GNSS satellite, e.g. from a spoofing device. As disclosed above, a spoofed signal may be a malicious signal aimed e.g. at falsifying or inhibiting a positioning procedure performed based on the at least one GNSS signal. Such spoofed signal may be structured to resemble a GNSS signal transmitted from a GNSS satellite.

The determining whether or not the GNSS signal is potentially manipulated may be performed according to predetermined rules, e.g. according to a predetermined algorithm. For example, such predetermined rules may assume that, if the at least one GNSS signal is not manipulated, one or more system time differences determined between the first GNSS system time and the reference time at least partially based on said at least one GNSS signal do not significantly differ from the obtained at least one reference system time difference. At the same time, the rule may assume that the determined at least one system time difference is not too close (e.g. equal) to the obtained reference system time difference.

For example, a system time difference may be determined based on one or more GNSS signals (e.g. calculated based on a positioning solution) and a corresponding reference system time difference may be obtained e.g. from a trusted server via a wireless connection. If the determined system time difference differs by more than a predetermined value from the obtained reference system time difference, the one or more GNSS signals are determined to be potentially manipulated. In another example, more than one system time differences may be determined based on one or more GNSS signals (e.g. calculated based on a positioning solution) and corresponding reference system time differences may be obtained e.g. from a trusted server via a wireless connection. If a predetermined number of the determined system time differences differ by more than a predetermined value from the obtained corresponding reference system time differences, the one or more GNSS signals are determined to be potentially manipulated.

Thus, the determining whether or not the at least one GNSS signal is potentially manipulated may in an exemplary embodiment comprise comparing the at least one system time difference with the at least one reference system time difference.

According to a further exemplary aspect of the invention, an apparatus is disclosed, wherein the apparatus comprises means for performing any one embodiment of the disclosed method (e.g. the steps of any one embodiment of the disclosed method) or a part thereof (e.g. at least some steps of any one embodiment of the disclosed method).

The means of the disclosed apparatus can be implemented in hardware and/or software. They may comprise for instance a processor for executing computer program code for realizing the required functions, a memory storing the program code, or both. Alternatively, they could comprise for instance circuitry that is designed to realize the required functions, for instance implemented in a chipset or a chip, like an integrated circuit. The disclosed apparatus may comprise a single means for all functions, a common plurality of means for all functions, or a plurality of different means for different functions.

According to a further exemplary aspect of the invention, an apparatus is disclosed, wherein the apparatus comprises at least one processor and at least one memory containing computer program code, the at least one memory and the computer program code with the at least one processor configured to cause the apparatus at least to perform any one embodiment of the disclosed method (e.g. the steps of any one embodiment of the disclosed method) or a part thereof (e.g. at least some steps of any one embodiment of the disclosed method).

For example, the disclosed apparatus(es) may be (a) module(s) or component(s) for (a) mobile device (s), for example (a) chip(s) or chipset(s). Alternatively, the disclosed apparatus(es) may be (a) mobile device(s). As disclosed above, the mobile device may be enabled for or support a GNSS based positioning solution like the Galileo system or the GPS system. This may be understood to mean that the mobile device is configured to estimate its position (e.g. determine a position estimate of its position) at least partially based on one or more GNSS signals (e.g. GNSS signals reveived from at least four GNSS satellites) observed at this position and GNSS navigation data (e.g. GNSS navigation data of the at least four GNSS satellites).

It is to be understood that the disclosed apparatus(es) may comprise only the disclosed components (e.g. means) or may further comprise one or more additional components (e.g. means). Examples of such additional components are a GNSS sensor, a communication interface (e.g. wireless communication interface like a receiver, a transmitter and/or a transceiver), a user interface (e.g. a touch-sensitive display, a keyboard, a touchpad, a display, etc.), etc.

According to a further exemplary aspect of the invention, a system is disclosed which comprises at least one of (1) the disclosed apparatus(es) (e.g. a mobile device) and (2) a network server (e.g. said network server for assistance data, e.g. said assisted-GNSS assistance data server). Optionally, the system may further comprise one or more GNSS satellites.

As disclosed above, the network server may be configured to provide (e.g. transmit) GNSS assistance data including or corresponding to said at least one reference system time difference to the mobile device.

The network server may be part of a plurality of network servers (e.g. forming a server cloud) or may be represented by such a plurality of servers (e.g. forming a server cloud).

According to a further exemplary aspect of the invention, a non-transitory computer readable storage medium is disclosed, in which computer program code is stored. The computer program code causes an apparatus to perform any one embodiment of the disclosed method (e.g. the steps of any one embodiment of the disclosed method) when executed by a processor or by a plurality of processors. The computer program code could be stored in the computer readable storage medium in the form of instructions encoding the computer-readable storage medium. The computer readable storage medium may be intended for taking part in the operation of a device, like an internal or external hard disk of a computer, or be intended for distribution of the program code, like an optical disc.

According to a further exemplary aspect of the invention, a computer program code is disclosed, the computer program code when executed by a processor (or by a plurality of processors) causing an apparatus to perform any one embodiment of the disclosed method (e.g. the steps of any one embodiment of the disclosed method).

The disclosed method, apparatus(es), system, non-transitory computer readable storage medium and computer program code may be for identifying potentially manipulated GNSS navigation data at least partially based on a system time difference between said first GNSS system time and a reference time and at least one reference system time difference.

In the following, further features and embodiments of these exemplary aspects of the invention will be described.

According to an exemplary embodiment of the invention, the reference time is a second GNSS system time different from the first GNSS system time.

In other words, as disclosed above, in an exemplary embodiment, the determined system time difference may be a system time difference between the first GNSS system time and said second GNSS system time. For example, according to an exemplary embodiment of the invention, the received GNSS signal is one of a GPS signal, a Galileo signal, a GLONASS signal, and a BeiDou signal. According to an exemplary embodiment of the invention, the first GNSS system time is one of the GPS Time (GPST), the Galileo System Time (GST), the GLONASS Time (GLONASST), and the BeiDou Time (BDT). According to an exemplary embodiment of the invention, the second GNSS system time is one of the GPS Time (GPST), the Galileo System Time (GST), the GLONASS Time (GLONASST), and the BeiDou Time (BDT) and different from the first GNSS system time.

According to an exemplary embodiment of the invention, the method further comprises:
- comparing a difference between said at least one system time difference and said at least one reference system time difference to a first predetermined threshold and/or to a second predetermined threshold; and
- determining said at least one GNSS signal to be potentially manipulated if said difference between said at least one system time difference and said at least one reference system time difference exceeds the first predetermined threshold and/or is below the second predetermined threshold and/or is equal to zero.

As disclosed above, the determining, at least partially based on said time difference and said at least one reference system time difference, whether or not the GNSS signal is potentially manipulated, may be performed according to a predetermined rule and may assume that, if the GNSS signal is not manipulated, a system time difference between the first GNSS system time and the reference time determined based on the at least one received GNSS signal does not significantly differ from a reference system time difference obtained e.g. from a trusted network server. Thus, if said difference between said at least one system time difference and said at least one reference system time difference exceeds the first predetermined threshold, the received at least one GNSS signal is determined to be potentially manipulated.

As small deviations are nevertheless expected e.g. as a result of typical statistical errors and usual imperfections (e.g. in signal reception, etc.), the determining may further assume that if the system time difference between the first GNSS system time and the reference time determined based on the at least one received GNSS signal is too close to or even matches the reference system time difference obtained e.g. from a trusted network server, the received GNSS signal(s) is(are) spoofed. For example, in case where a signal is received from a spoofing device that is constructed to resemble a Galileo signal, a difference between the "spoofed" GGTO included in this spoofed signal and a system time difference determined based on said the spoofed signal (e.g. calculated from a position solution determined based on said signal) may be equal to zero. In other words, if said difference between said at least one system time difference and said at least one reference system time is below the second predetermined threshold and/or is equal to zero, the at least one GNSS signal is determined to be potentially manipulated.

According to an exemplary embodiment of the invention, the method further comprises one or more of the following, if it is determined that said at least one GNSS signal is potentially manipulated:
- identifying or causing of identifying said at least one GNSS signal as potentially manipulated;
- rejecting said at least one GNSS signal;
- if a position of said mobile device is estimated at least partially based on said at least one GNSS signal, identifying said position estimate as potentially manipulated;
- associating said at least one GNSS signal with a manipulation risk level.

Identifying the GNSS signal as potentially manipulated may be understood to mean that manipulation data identifying the GNSS signal as potentially manipulated are hold available by the mobile device, for example by being stored in a memory of the mobile device. Causing of identifying the GNSS signal as potentially manipulated may be understood to mean that the mobile device provides manipulation data to a remote device like a server causing the remote device to identify the GNSS signal as potentially manipulated. This may have the effect that other mobile devices receiving the (spoofed) GNSS signal may be informed (e.g. by the remote device like the server) that the GNSS signal is potentially manipulated.

Rejecting the GNSS signal may be understood to mean that navigation data included in the rejected GNSS signal are not used for estimating (e.g. determining a position estimate of) a position of the mobile device. This has the effect that only GNSS signals which are considered to be trustworthy (i.e. not potentially manipulated) are used for estimating (e.g. determining a position estimate of) a position of the mobile device.

Identifying a position estimate as potentially manipulated may be understood to mean that manipulation data identifying the position estimate as potentially manipulated are hold available by the mobile device, for example by being stored in a memory of the mobile device. By identifying the position estimate as potentially manipulated, the potential manipulation can be considered when further processing the position estimate. For example, business services or applications which rely on trustworthy positioning like car sharing services may thus be prevented from using position estimates identified as potentially manipulated.

Associating the GNSS signal with a manipulation risk level may be understood to mean that manipulation risk level data representing a manipulation risk level are hold available by the mobile device, for example by being stored in a memory of the mobile device. A manipulation risk level may be understood to be indicative of a probability that GNSS navigation data included in the GNSS signal are manipulated. For example, a manipulation risk level may represent a percentage indicative of a probability that said GNSS navigation data are manipulated.

According to an exemplary embodiment of the invention, the method further comprises:
- receiving the at least one reference system time difference via a bi-directional wireless connection.

As disclosed above, an example of such a bi-directional wireless connection (wireless communication path) is a wireless connection or link in a wireless communication network, in particular a terrestrial wireless communication network like a WLAN or a cellular network, or a Device-to-Device (D2D) connection.

According to an exemplary embodiment of the invention, the method further comprises:
- receiving the at least one reference system time difference from a network server.

As disclosed above, the network server may for example be a trusted server, e.g. a network server for assistance data (e.g. an assisted-GNSS assistance data server). The network server may be part of a plurality of network servers (e.g. forming a server cloud) or may be represented by such a plurality of servers (e.g. forming a server cloud).

According to an exemplary embodiment of the invention, the method further comprises:
- receiving the at least one reference system time difference from a network server via a bi-directional wireless connection.

According to an exemplary embodiment of the invention, the method further comprises:
- obtaining the at least one reference system time difference based on an arithmetical prediction model, in particular estimating the at least one reference system time difference at the mobile device based on the arithmetical prediction model.

As disclosed above, the reference system time difference may be predicted, for example at the mobile device, using an arithmetical prediction model built for example based on knowledge of how respective GNSS system times are generated in synchrony with reference time scales such as UTC or TAI.

According to an exemplary embodiment of the invention, the method further comprises:
- extracting the at least one reference system time difference from the at least one GNSS signal.

As disclosed above, GNSS satellites may broadcast navigation data including an offset between their respective system time to a system time of a different GNSS system as reference system time difference. An example is the Galileo system, where Galileo satellites broadcast the difference between the GPS Time (GPST) and the Galileo System Time (GST), i.e. the Galileo-GPS-Time-Offset (GGTO) with navigation data. In such cases the at least one reference system time difference may be extracted (directly) from a received at least one Galileo signal to be compared to a system time difference determined based on the received at least one Galileo signal (e.g. calculated from a position solution resulting from a position estimate performed based on the at least one Galileo signal).

According to an exemplary embodiment of the invention, said at least one GNSS signal comprises GNSS navigation data comprising at least one of ephemeris data of a GNSS satellite and clock data of said GNSS satellite.

In certain exemplary embodiments of the invention, the ephemeris data may enable determining an orbital position of the GNSS satellite at a given time. For example, the ephemeris data may represent or contain Keplerian parameters. In particular, the ephemeris data may represent or contain ephemeris parameters as specified by the Galileo open service specifications or GPS specifications.

In certain exemplary embodiments of the invention, the clock data enable determining a deviation of a clock of the GNSS satellite from a GNSS system time (e.g. Galileo system time or GPS time) at a given time. For example, the clock data may represent or contain clock correction parameters. In particular, the clock data may represent or contain clock correction parameters as specified by Galileo open service specifications or GPS specifications.

According to an exemplary embodiment of the invention, the method further comprises:
- determining a position estimate of the mobile device at least partially based on said at least one GNSS signal.

Estimating the position of the mobile device at least partially based on the at least one GNSS signal may be understood to mean estimating the position of the mobile device at least partially based on navigation data comprised by the at least one GNSS signal. Estimating the position of the mobile device at least partially based on the at least one GNSS signal may thus be understood to mean that the estimation depends on the GNSS signals and the GNSS navigation data. It is however to be understood that the estimating may optionally depend on further data or information.

Moreover, estimating the position of the mobile device may be understood to mean that a position estimate of the position of the mobile device is determined at least partially based on the GNSS signals and the GNSS navigation data. Therein, the estimating or determining may be performed according to a predetermined GNSS positioning algorithm as disclosed above in more detail.

As disclosed above, estimating the position of the mobile device may employ observing at least four GNSS satellites to enable the mobile device to estimate its position based on the observed GNSS signals and (e.g. valid) GNSS navigation data of these at least four GNSS satellites.

According to an exemplary embodiment of the invention, GNSS navigation data comprised by said at least one GNSS signal are valid (e.g. only) for a limited time period.

For example, the GNSS navigation data may contain or represent a reference time for the GNSS navigation data or parts thereof. For example, the GNSS navigation data or parts thereof may be valid for a predetermined time period before and after such a reference time. Alternatively or additionally, the GNSS navigation data may contain or represent a validity time indicating until when the GNSS navigation data or parts thereof are valid. A reference time or a validity time may be represented by or contained in the GNSS navigation data in the GNSS system time (e.g. GPS time or Galileo system time). In particular, a reference time or a validity time may be represented by or contained in the GNSS navigation data in seconds in the respective GNSS week (e.g. GPS week or Galileo week).

As disclosed above, the GNSS navigation data may contain ephemeris data enabling determining an orbital position of the GNSS satellite at a given time and/or clock data enabling determining a deviation of a clock of the GNSS satellite from a GNSS system time (e.g. Galileo system time or GPS time) at a given time. The ephemeris data or clock data may be only valid for a limited period of time and may no longer be used after this limited period of time. Accordingly, the ephemeris data and/or clock data may be parts of the GNSS navigation data that are only valid for a limited time period.

According to an exemplary embodiment of the invention, each GNSS satellite of a GNSS system periodically broadcasts respective GNSS navigation data. As disclosed above, the respective GNSS navigation data may be part of a message conveyed by a respective GNSS signal broadcasted by the respective GNSS satellite. An example of such a message is a Galileo F/NAV message as specified by the Galileo open service specifications or a GPS navigation message as specified by the GPS specifications.

It is to be understood that the presentation of the invention in this section is merely by way of examples and non-limiting.

Other features of the invention will become apparent from the following detailed description considered in conjunction with the accompanying figures. It is to be understood, however, that the figures are designed solely for purposes of illustration and not as a definition of the limits of the invention, for which reference should be made to the appended claims. It should be further understood that the figures are not drawn to scale and that they are merely intended to conceptually illustrate the structures and procedures described herein.

### BRIEF DESCRIPTION OF THE FIGURES

- Fig. 1: is a block diagram of an exemplary embodiment of a system according to the invention;
- Fig. 2: is a block diagram of an exemplary embodiment of a mobile device according to the invention;
- Fig. 3: is a block diagram of an exemplary embodiment of a server according to the invention;
- Fig. 4: is a flow chart illustrating an exemplary embodiment of a method according to the invention;
- Fig. 5: is a schematic illustration of examples of tangible and non-transitory storage media according to the invention.

### DETAILED DESCRIPTION OF THE FIGURES

The following description serves to deepen the understanding of the present invention and shall be understood to complement and be read together with the description of example embodiments of the invention as provided in the above SUMMARY section of this specification.

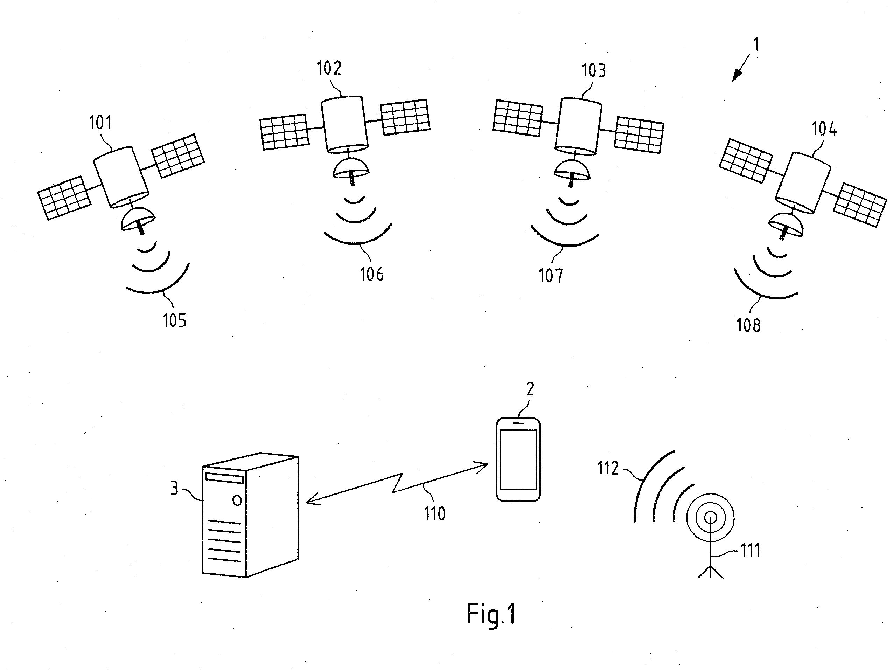

Fig. 1 is a schematic high-level block diagram of a system 1 according to an exemplary aspect of the invention. For exemplary purposes and without limiting the scope of the invention, it is assumed in the following that system 1 is part of a GNSS based positioning solution.

For illustrative purposes, Fig. 1 shows four GNSS satellites 101 to 104 of a GNSS system like the Galileo system and/or the GPS system. Each GNSS satellite of GNSS satellites 101 to 104 broadcasts (e.g. periodically or repeatedly or continuously) a respective GNSS signal of GNSS signals 105 to 108 conveying a respective message containing respective GNSS navigation data. In the following, it is assumed that the respective GNSS navigation data contain ephemeris data, which enable determining an orbital position of the respective GNSS satellite at a given time for a limited period of time and clock data that include a timestamp indicative of the GNSS system time to which the respective GNSS satellite is synchronized to and correction data that enable determining a deviation of a clock of the respective GNSS satellite from the GNSS system time at a given time for a limited period of time. As disclosed above, an example of such a message is a Galileo F/NAV message as specified by the Galileo open service specifications or a GPS navigation message as specified by the GPS specifications. Accordingly, ephemeris data may represent or contain ephemeris parameters as specified by the Galileo open service specifications or the GPS specifications; and the clock data may represent or contain timestamp and clock correction parameters as specified by Galileo open service specifications or the GPS specifications.

System 1 comprises a mobile device 2 and a server 3. Server 3 and mobile device 2 may communicate with each other via communication path 110. Communication path 110 may be a direct or indirect communication path. For example, communication path 110 may comprise one or more hops, for example one or more communication links or communication connections. In the following, it is assumed that communication path 110 is a (bi-directional) wireless communication connection in a cellular network like a 2G/3G/4G/5G cellular communication network. It is however to be understood that the invention is not limited to this. Communication path 110 may for example similarly be a Device-to-Device (D2D) communication path or a (bi-directional) wireless communication connection in a Wireless Local Area Network (WLAN).

Without liming the scope of the invention; Fig. 1 only shows a single server 3. System 1 is however not limited to a single server 3, but may optionally comprise a plurality of servers (e.g. forming a server cloud). Accordingly, server 3 may be part of such a plurality of servers (e.g. a server cloud) or may be represented by such a plurality of servers (e.g. a server cloud). Server 3 may collect reference system time differences e.g. as part of GNSS assistance data and may provide collected reference system time differences e.g. with collected GNSS assistance data to mobile devices like mobile device 2. Alternatively or in addition, processor 300 of server 3 may be configured to estimate or calculate reference system times based on an arithmetic prediction model, e.g. using a corresponding program code and necessary data stored in program memory 301.

For example, mobile device 2 may be one of a smart home device, a smartphone, a tablet computer, a notebook computer, a smart watch, and a smart band. Mobile device 2 may support the GNSS based positioning solution. This may be understood to mean that mobile device 2 is configured to estimate its position (e.g. determine a position estimate of its position) at least partially based on GNSS signals 105 to 108 observed/received at this position and valid GNSS navigation data of GNSS satellites 101 to 104.

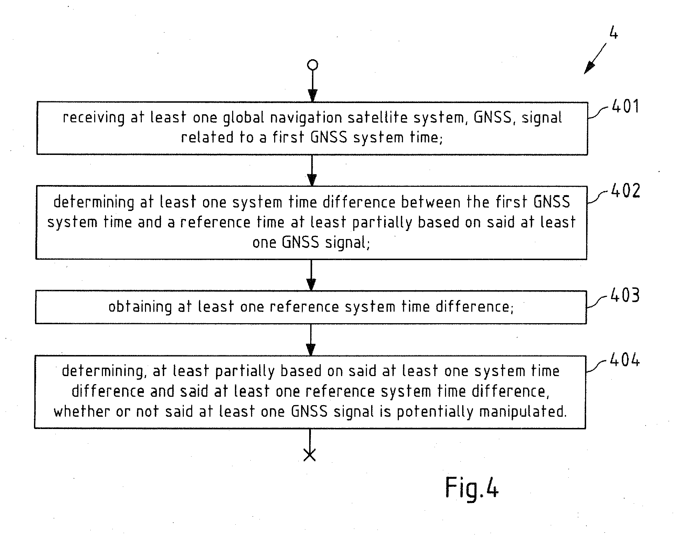

Since the GNSS navigation data are crucial for the GNSS based positioning solution and only valid for a limited period of time, the GNSS navigation data need to be updated at regular intervals. This may be exploited by an attacker by installing a spoofing device 111 in a certain area which broadcasts a spoofed GNSS signal 112. For example, spoofed GNSS signal 112 may be falsified such that it resembles GNSS signal 105 broadcast by GNSS satellite 101, but spoofed GNSS signal 112 may convey a message containing manipulated GNSS navigation data, for example to cause mobile device 2 to estimate its position to be somewhere other than it actually is. As disclosed in more detail below with respect to Fig. 4, this threat may be mitigated by the disclosed method.

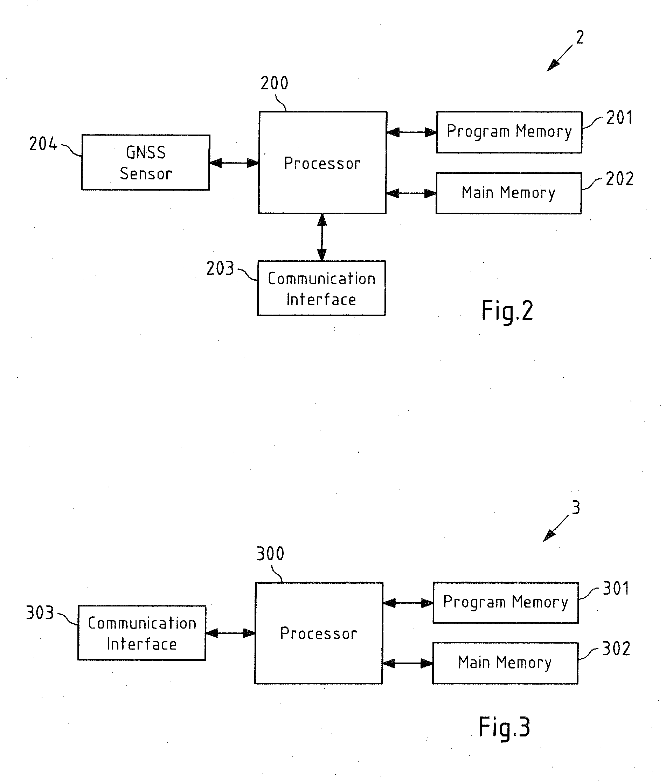

Fig. 2 is a block diagram of an exemplary embodiment of mobile device 2 according to the invention. In the following, it is assumed that mobile device 2 of Fig. 1 corresponds to mobile device 2 of Fig. 2.

Mobile device 2 comprises a processor 200. Processor 200 may represent a single processor or two or more processors, which are for instance at least partially coupled, for instance via a bus. Processor 200 executes a computer program code stored in program memory 201 (e.g. computer program code causing mobile device 2 to perform any one embodiment of the disclosed method (e.g. the steps of any one embodiment of the disclosed method) or a part thereof (e.g. at least some steps of any one embodiment of the disclosed method) (as for instance further described below with reference to Fig. 4), when executed on processor 200), and interfaces with a main memory 202. Program memory 201 may also contain an operating system for processor 200 and further data like GNSS navigation data, system time differences and reference system time differences. Some or all of memories 201 and 202 may also be included into processor 200. One of or both of memories 201 and 202 may be fixedly connected to processor 200 or at least partially removable from processor 200, for example in the form of a memory card or stick.

A program memory (e.g. program memory 201) may for example be a non-volatile memory. The program memory (e.g. program memory 201) may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 202) may for example be a volatile memory. It may for example be a DRAM memory, to give non-limiting example. It may for instance be used as a working memory for a processor (e.g. processor 200) when executing an operating system and/or programs.

Processor 200 further controls a wireless communication interface 203 configured for communicating via a cellular network (e.g. to transmit and receive cellular radio signals). For example, wireless communication interface 203 may be or may comprise a 2G/3G/4G/5G radio transceiver. Mobile device 2 may use wireless communication interface 203 to receive reference system time differences and optionally a reference time such as said second GNSS system time different from said first GNSS system time for determining the at least one system time difference from server 3 of system 1 (e.g. via wireless communication path 110) or from a different network entity.

Moreover, processor 200 controls a GNSS sensor 204 configured for receiving GNSS signals (e.g. GNSS signals 105 to 108 broadcasted by GNSS satellites 101 to 104 of Fig. 1). GNSS sensor 204 is configured for (e.g. periodically or repeatedly) scanning for observable GNSS signals (e.g. GNSS signals 105 to 108 broadcasted by GNSS satellites 101 to 104 of Fig. 1). Therein, a respective GNSS signal may be understood to be observable if the respective GNSS signal is receivable with a minimum quality (e.g. a minimum signal-to-noise ratio and/or a minimum signal power, e.g. at least -90 dBm or -95 dBm) by GNSS sensor 204.

GNSS sensor 204 enables mobile device 2 to receive GNSS navigation data contained in a message conveyed in an observed GNSS signal. To this end, GNSS sensor 204 may be configured for extracting the GNSS navigation data from the received or observed GNSS signal. Further, GNSS sensor 204 enables mobile device 2 to receive reference system time differences if contained in an observed GNSS signal. To this end, GNSS sensor 204 may be configured for extracting the reference system time difference (for example a Galileo-GPS-Time-Offset, GGTO, in case of a GNSS signal observed from Galileo satellites) from the received or observed GNSS signal. Moreover, GNSS sensor 204 enables mobile device 2 to estimate its position based on GNSS signals observed when scanning for GNSS signals at this position. For example, GNSS sensor 204 may be configured for providing processor 200 with data necessary for determining a position estimate of the position of mobile device 2. To this end, GNSS sensor 204 may be configured for extracting, from each of the observed GNSS signals, respective GNSS data contained in a message or a part thereof conveyed by the respective GNSS signal (e.g. representing a respective time-of-transmission of the respective GNSS signal from the respective GNSS satellite) and for determining, for each of the observed GNSS signals, respective GNSS observation data relating to the observation of the respective GNSS signal by GNSS sensor 204 (e.g. representing a respective time-of-arrival of the respective GNSS signals). It is to be understood that any computer program code required for receiving and processing received GNSS signals may be stored in an own memory of GNSS sensor 204 and may be executed by an own processor of GNSS sensor 204 or it may be stored for example in program memory 201 and executed for example by processor 200.

Processor 200 may enable mobile device 2 to obtain the at least one reference system time difference based on an arithmetical prediction model. To this end, processor 200 may be configured for determining, estimating or calculating the reference system time difference based on an arithmetical prediction model for example based on a computer program code representing said arithmetical prediction model stored in program memory 201 and executed for example by processor 200.

The components 201 to 204 of mobile device 2 may for instance be connected with processor 200 by means of one or more serial and/or parallel busses.

It is to be understood that mobile device 2 may comprise various other components like a user interface for receiving user input.

Fig. 3 is a block diagram of an exemplary embodiment of server 3 according to the invention. In the following, it is assumed that server 3 of system 1 of Fig. 1 corresponds to server 3 of Fig. 3.

Server 3 comprises a processor 300. Processor 300 may represent a single processor or two or more processors, which are for instance at least partially coupled, for instance via a bus. Processor 300 executes a computer program code (e.g. computer program code causing server 3 to store reference system time differences e.g. as part of GNSS assistance data and optionally reference times such as said second GNSS system time different from said first GNSS system time for determining the at least one system time difference to provide stored reference system time differences and optionally said reference times to mobile device 2 of system 1) stored in program memory 301, and interfaces with a main memory 302. Accordingly, program memory 301 may contain reference system time differences and optionally said reference times. Program memory 301 may also contain an operating system for processor 300. Some or all of memories 301 and 302 may also be included into processor 300. One of or both of memories 301 and 302 may be fixedly connected to processor 300 or at least partially removable from processor 300, for example in the form of a memory card or stick.

Processor 300 further controls a communication interface 303 which is configured to communicate via a communication network. Server 3 may use communication interface 303 to communicate with mobile device 2 of system 1. In the following, it is assumed that communication interface 303 is a wireless communication interface configured for communicating via a cellular network (e.g. to transmit and receive cellular radio signals). For example, communication interface 303 may be or may comprise a 2G/3G/4G/5G radio transceiver. It is however to be understood that the invention is not limited to this. Interface 303 may similarly be a wireless communication interface configured for communicating via a Device-to-Device (D2D) communication path or a (bi-directional) wireless communication connection in a Wireless Local Area Network (WLAN). For example, server 3 may use communication interface 303 to transmit stored reference system time differences (e.g. as part of or with GNSS assistance data) and optionally said reference times to mobile device 2 of system 1 (e.g. via wireless communication path 110).

The components 301 to 303 of server 3 may for example be connected with processor 300 by means of one or more serial and/or parallel busses.

It is to be understood that server 3 may comprise various other components like a user interface for receiving user input.

Fig. 4 is a flow chart 4 illustrating an exemplary embodiment of a method according to the invention. Without limiting the scope of the invention, it is assumed in the following that mobile device 2 as disclosed above with respect to system 1 of Fig. 1 performs the steps of flow chart 4.

In a step 401, at least one GNSS signal related to a first GNSS system time is received. For example, the at least one GNSS signal may be received by mobile device 2 via communication interface 203 from any one of GNSS satellites 101 to 104 in Fig. 1.

As disclosed above, each GNSS satellite of GNSS satellites 101 to 104 broadcasts a respective GNSS signal of GNSS signals 105 to 108 conveying a respective message containing respective GNSS navigation data containing ephemeris and clock data. Spoofing device 111 broadcasts a spoofed GNSS signal 112 which is falsified such that it resembles GNSS signal 105 broadcast by GNSS satellite 101, however, spoofed GNSS signal 112 may convey a message containing manipulated GNSS navigation data.

Mobile device 2 may for example receive the GNSS signal from one of GNSS satellites 101 to 104 or from spoofing device 111 in step 401 conveying a message containing GNSS navigation data or manipulated GNSS navigation data and may extract the GNSS navigation data or the manipulated GNSS navigation data from the received GNSS signal.

Received GNSS navigation data extracted from the received GNSS signal may be stored in program memory 201.

The GNSS signal is related to a first GNSS system time. As disclosed above, the GNSS signal may comprise navigation data with ephemeris data and clock data. The clock data comprises a timestamp indicative of the GNSS system time the transmitting GNSS satellite is synchronized to and clock correction data to enable determining a deviation of the GNSS satellite from which the mobile device 2 has received a respective GNSS signal from the GNSS system time at a given time. For example, the clock data may thus include or represent or contain said timestamp and clock correction parameters. Thus, the GNSS signal may be related to the first GNSS system time by comprising said clock data.

In a step 402, at least one system time difference between the first GNSS system time and a reference time is determined at least partially based on said at least one GNSS signal. As disclosed above, a reference time may for example be a second GNSS system different from the first GNSS system time. For example, the first GNSS system time may be the GPS Time (GPST) and the second GNSS system time may be the Galileo System Time (GST). In this case, said system time difference to be determined corresponds to the difference (offset) between the GPST and the GST. As GNSS system times are synchronized to reference time scales such as the UTC or the TAI, also such reference time scale may serve as reference time. In the following and without limitation it is assumed that the reference time is a second GNSS system time different from the first GNSS system time.

As disclosed above, mobile device 2 (e.g. processor 200) may be configured to determine said at least one system time difference by calculating or estimating said at least one system time difference from a position solution. In other words, processor 200 of mobile device mobile device 2 may be configured to employ a corresponding calculation algorithm based on a position solution (e.g. based on an estimated position of mobile device 2 at a given time or at more than one time point) to determine the first GNSS system time. Processor 200 may further be configured to derive the at least one system time difference to be determined by comparing the determined first system time to a second system time (reference time) different from the first system time to determine the at least one system time difference. Mobile device 2 (e.g. processor 200) may be configured to determine one or more system time differences at different (e.g. sequential) points in time. For example, and without limitation, mobile device 2 may receive GNSS satellite signals 105 to 108 from GNSS satellites 101 to 104 of Fig. 1 during a predetermined time, e.g. for deriving a position solution or for GNSS navigation. One or more system time differences may be determined during this predetermined time based on GNSS satellite signals 105 to 108.

Based on received GNSS signals, mobile device 2 may estimate a position solution (position estimate of mobile device 2) and may derive its own receiver time in units of a corresponding GNSS system time. To this end, mobile device 2 (e.g. processor 200) may in a non-limiting example employ processing as exemplified in the following. As mentioned, satellites 101 to 104 of Fig. 1 may correspond to satellites of a GNSS system such as the GPS system. As further disclosed above, a GNSS such as the GPS system maintains its own system time, e.g. the GPST in case of the GPS system which is synchronized to UTC or TAI. Thus, each of satellites 101 to 104 of Fig. 1 is synchronized to the respective system time, e.g. to the GPST, and a GNSS signal transmitted from any one of satellites 101 to 104 is time stamped with said system time. Such GNSS signal transmitted from any one of satellites 101 to 104 may further include clock correction terms that enable determining how much each individual satellite is off from said system time.

Based on signals received from satellites 101 to 104, mobile device 2 may estimate corresponding signal transmission times (Tx) based on timestamps and clock correction data of the received GNSS signals. Mobile device may further estimate a receiver time Rx' in the GNSS system time of the GNSS satellites from which it receives GNSS signals, e.g. in the GPST in case satellites 101 to 104 are (all) GPS satellites. An error of the estimated receiver time (Rx') may be referred to as Clock Bias. Said Clock Bias may be derived by mobile device 2 when obtaining a position solution. The following is a non-limiting illustrative example:
Mobile device 2 receives four GPS signals e.g. from satellites 101 to 104 of Fig. 1 with time stamps 1001, 1020,1018 and 1003 (in milliseconds, ms) and estimates its receiver time (Rx') to be 1090. Based thereon, mobile device 2 may estimate corresponding times of travel of the respective GPS signals:
- 1090-1001 = 89 ms,
- 1090-1020 = 70 ms,
- 1090-1018 = 72 ms,
- 1090-1003 = 83 ms,
which can be converted to corresponding pseudoranges by multiplication with the speed of light:
- 26681528.762 m,
- 20985472.06 m,
- 21585056.976 m, and
- 24882774.014 m.

Mobile station 2 (processor 200) is configured to estimate (e.g. using an algorithm solving a corresponding equation system stored in program memory 201) the position solution that matches these pseudo ranges. Based on the position solution, actual ranges to satellites 101 to 104 can be derived based on the above pseudoranges and can be converted into actual times of travel as:
- 23983396.64 m => 80 ms,
- 18287339.938 m => 61 ms,
- 24882774.014 m => 83 ms,
- 22184641.892 m => 94 ms.

A difference between these actual times of travel and the times of travel estimated based on the estimated receiver time (Rx') is 9 ms which corresponds to said Clock Bias. As a result, the actual receiver time (Rx) is 1081.

Similarly, based on received GNSS signals from e.g. two GNSS systems, mobile device 2 may further estimate a GNSS System Time Difference between such two GNSS systems based on a position solution (position estimate of mobile device 2). In a non-limiting example, mobile device 2 may be configured to perform the following processing.

Mobile device 2 may for example receive four GPS signals with time stamps 1001, 1020, 1018 and 1003 (GPS times in milliseconds, ms) e.g. from satellites 101 to 104 of Fig, 1 and two Galileo signals (from satellites not shown in Fig. 1) with time stamps 1042, 1050 (Galileo times in milliseconds, ms). A system time difference between the GPS time and the Galileo time is not known to mobile device 2.

To estimate said system time difference, mobile device 2 firstly estimates its actual receiver time both in the GPS system as well as in the Galileo system. To this end, mobile device estimates its receiver time (Rx') in the GPS system as 1090 and its receiver time in the Galileo system as 1120. Mobile device then estimates travel times of the six signals as:
- 1090-1001 = 89 ms (GPS signal),
- 1090-1020 = 70 ms (GPS signal),
- 1090-1018 = 72 ms (GPS signal),
- 1090-1003 = 83 ms (GPS signal),
- 1120 - 1042 = 78 ms (Galileo signal), and
- 1120 - 1050 = 70 ms (Galileo signal),
and estimates pseudoranges by multiplication with the speed of light as:
- 26681528.762 m (GPS signal),
- 20985472.06m (GPS signal),
- 21585056.976 m (GPS signal),
- 24882774.014 m (GPS signal),
- 23383811.724 m (Galileo signal), and
- 20985472.06 m (Galileo signal).

Mobile device 2 derives a position estimate (the position matching these pseudo ranges) by solving a corresponding equation system. Based thereon, mobile device 2 estimates actual ranges to the satellites and based thereon actual travel times as:
- 23983396.64 m => 80 ms (GPS signal),
- 18287339.938 m => 61 ms (GPS signal),
- 24882774.014 m => 83 ms (GPS signal),
- 22184641.892 m => 94 ms (GPS signal),
- 19786302.228 m => 66 ms (Galileo signal), and
- 17387962.564 m => 58 ms (Galileo signal).

By comparing the actual distances with the distances based on the estimated receiver times, mobile device 2 derives a difference of 9 ms for the GPS signals and of 12 ms for the Galileo signals. A corresponding Clock Bias is thus 9 ms for the GPS signals and 12 ms for the Galileo signals.

An actual time of mobile device 2 in the GPS system is thus 1081, and an actual time of mobile device 2 in the Galileo system is thus 1108. Mobile device 2 thus determines a system time difference between the GPS system time (example of a first GNSS system time) and the Galileo system time (example of a second GNSS system time) of 27 ms (1108-1081 = 27 ms) based on the received GNSS signals (the four received GPS signals and the two received Galileo signals).

Thus, as exemplified above, mobile device 2 may obtain a system time difference between two or more different GNSS systems from a position solution estimated based on received GNSS signals received from satellites of the corresponding GNSS systems. In this way, for example system time differences between the GPS system and the Beidou system (GPS-BEI), between the GPS system and the Galileo system (GPS-GAL), between the GPS system and the GLONASS system (GPS-GLO) can be determined based on corresponding received GNSS signals., etc as assistance data and compare to what we have calculated. As disclosed above, the difference between the GPS system and the Galileo system (GPS-GAL) can be extracted from a satellite signal received from a Galileo satellite.
As will be shown in the following, such system time differences determined based on the received signals can be compared to system time differences received as information (e.g. as or included in assistance data) from a trusted source such as a trusted server and/or via a prediction model. If received signals are spoofed, it is likely that system time differences determined based on such spoofed signals will deviate from system time differences obtained from such trusted source.

Again referring to Fig. 4, in a step 403, at least one reference system time difference is obtained. As disclosed above, mobile device 2 may be configured to obtain the at least one reference system time difference from server 3 via communication interface 203 via communication path 110. Alternatively or in addition, processor 200 of mobile device 2 may be configured to estimate or calculate reference system times based on an arithmetic prediction model, e.g. using a corresponding program code and necessary data stored in program memory 201. Further alternatively or in addition, mobile device 2 may be configured to extract the at least one reference system time difference from the at least one GNSS signal, e.g. from any one or all of GNSS signals 105 to 108 received via communication interface 203. As disclosed above, GNSS satellites may broadcast navigation data including an offset between their respective system time to a system time of a different GNSS system as reference system time difference. An example is the Galileo-GPS-Time-Offset (GGTO) broadcast by Galileo satellites with their navigation data. For example, if the at least one reference system time difference is included in a received GNSS signal, processor 200 of mobile device 2 may be configured to extract the reference system time from the received GNSS signal. Reference system times may be obtained at one or more points in time, e.g. in correspondence with one or more system time differences determined at step 402.

In a step 404, it is determined by mobile device 2, at least partially based on said at least one system time difference and said at least one reference system time difference, whether or not said at least one GNSS signal is potentially manipulated.

As disclosed above, the determining in step 404 may be based on the assumption that, if the GNSS signal received in step 401 is not manipulated, the at least one system time difference obtained in step 402 does one the one hand not significantly deviate from the reference system time obtained at step 403 while it is on the other hand not equal to said obtained reference system time.

As disclosed above, a system time difference may be e.g. determined based on one or more GNSS signals and a corresponding reference system time difference may be obtained e.g. from a trusted server via a wireless connection. If the determined system time difference differs by more than a predetermined value from the obtained reference system time difference, the one or more GNSS signals are determined to be potentially manipulated. In another example, more than one system time differences may be determined based on one or more GNSS signals and corresponding reference system time differences may be obtained e.g. from a trusted server via a wireless connection. If a predetermined number of the determined system time differences differ by more than a predetermined value from the obtained corresponding reference system time differences, the one or more GNSS signals are determined to be potentially manipulated. Further, if (a predetermined number of) the determined system time difference(s) differ(s) by less than a further predetermined value from the obtained reference system time difference(s), the one or more GNSS signals are equally determined to be potentially manipulated.

As disclosed above in more detail, if it is determined in step 404 that the GNSS signal received in step 401 is potentially manipulated, the GNSS navigation data may for example be identified as potentially manipulated or may be rejected.

It is to be understood that flowchart 4 or some steps of flowchart 4 (e.g. steps 401, 402 and 403) may be at least partially repeated one or more times. In such a repetition, time differences may be compared to corresponding reference time differences at different (e.g. sequential) points in time, e.g. during a predetermined period for same and/or different received GNSS signal(s). Determining at stage 404 may then determine whether or not the at least one GNSS signal is potentially manipulated if a predetermined number (one or more) of determined system time differences differs from (a) corresponding reference time difference(s) by more than a predetermined value.

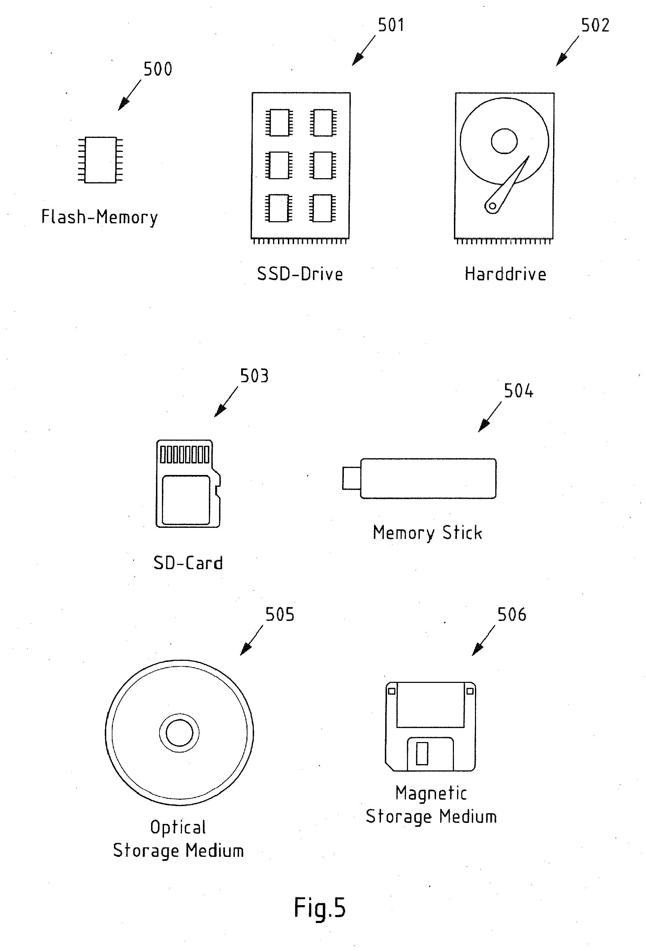

Fig. 5 is a schematic illustration of examples of tangible and non-transitory computer-readable storage media according to the present invention that may for instance be used to implement memory 201 of Fig. 2 and memory 301 of Fig. 3. To this end, Fig. 5 displays a flash memory 500, which may for instance be soldered or bonded to a printed circuit board, a solid-state drive 501 comprising a plurality of memory chips (e.g. Flash memory chips), a magnetic hard drive 502, a Secure Digital (SD) card 503, a Universal Serial Bus (USB) memory stick 504, an optical storage medium 505 (such as for instance a CD-ROM or DVD) and a magnetic storage medium 506.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile device, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method performed by a mobile device, said method comprising:
- receiving at least one global navigation satellite system, GNSS, signal related to a first GNSS system time;
- determining at least one system time difference between the first GNSS system time and a reference time at least partially based on said at least one GNSS signal;
- obtaining at least one reference system time difference; and
- determining, at least partially based on said at least one system time difference and said at least one reference system time difference, whether or not said at least one GNSS signal is potentially manipulated.

2. The method according to claim 1, wherein the reference time is a second GNSS system time different from the first GNSS system time.

3. The method according to any of claims 1 or 2, further comprising:
- comparing a difference between said at least one system time difference and said at least one reference system time difference to a first predetermined threshold and/or to a second predetermined threshold; and
- determining said at least one GNSS signal to be potentially manipulated if said difference between said at least one system time difference and said at least one reference system time difference exceeds the first predetermined threshold and/or is below the second predetermined threshold and/or is equal to zero.

4. The method according to any of claims 1 to 3, said method further comprising one or more of the following, if it is determined that said at least one GNSS signal is potentially manipulated:
- identifying or causing of identifying said at least one GNSS signal as potentially manipulated;
- rejecting said at least one GNSS signal;
- if a position of said mobile device is estimated at least partially based on said at least one GNSS signal, identifying said position estimate as potentially manipulated;
- associating said at least one GNSS signal with a manipulation risk level.

5. The method according to any of claims 1 to 4, further comprising:
- receiving the at least one reference system time difference via a bi-directional wireless connection.

6. The method according to any of claims 1 to 5, further comprising:
- receiving the at least one reference system time difference from a network server.

7. The method according to any of claims 1 to 6, further comprising:
- obtaining the at least one reference system time difference based on an arithmetical prediction model, in particular estimating the at least one reference system time difference at the mobile device based on the arithmetical prediction model.

8. The method according to any of claims 1 to 7, comprising:
- extracting the at least one reference system time difference from the at least one GNSS signal.

9. The method according to any of claims 1 to 8, wherein said at least one GNSS signal comprises GNSS navigation data comprising at least one of ephemeris data of a GNSS satellite and clock data of said GNSS satellite.

10. The method according to any of claims 1 to 9, further comprising:
- determining a position estimate of the mobile device at least partially based on said at least one GNSS signal.

11. The method according to any of claims 1 to 10, wherein GNSS navigation data comprised by said at least one GNSS signal are valid for a limited time period, and/or wherein each GNSS satellite of a GNSS system periodically broadcasts a GNSS signal comprising respective GNSS navigation data.

12. A computer program code, the computer program code when executed by a processor causing an apparatus to perform the method according to any of claims 1 to 11.

13. An apparatus, the apparatus comprising means for performing the method according to any of claims 1 to 11.

14. The apparatus according to claim 13, wherein the apparatus is a mobile device or a module for a mobile device.

15. The apparatus of any of claims 13 or 14, the means comprising at least one processor; and at least one memory containing computer program code, the at least one memory and the computer program code with the at least one processor configured to cause the apparatus to at least perform the method of any of claims 1 to 11.
